# EUROPÄISCHE PATENTSCHRIFT

(11) **EP 3 044 104 B1**
(45) Veröffentlichungstag und Bekanntmachung des Hinweises auf die Patenterteilung: **14.11.2018**
(21) Anmeldenummer: 14762027.2
(22) Anmeldetag: 12.09.2014
(51) Int. Cl.: B65D 1/02, B65D 1/09, A61J 1/06, A61J 1/20

(54) **AMPULLE FÜR EINE MEDIZINISCHE FLÜSSIGKEIT UND VERFAHREN ZUM HERSTELLEN EINER AMPULLE**
AMPOULE FOR MEDICAL LIQUID AND METHOD FOR PRODUCING AN AMPOULE
AMPOULE POUR LIQUIDE MÉDICAL ET PROCÉDÉ DE FABRICATION D'UNE AMPOULE

(30) Priorität: 12.09.2013 EP 13184147
(43) Veröffentlichungstag der Anmeldung: 20.07.2016
(73) Patentinhaber: Fresenius Kabi Deutschland GmbH, 61352 Bad Homburg (DE)
(72) Erfinder: BRANDENBURGER, Torsten, 61203 Reichelsheim (DE); RAHIMY, Ismael, 61169 Friedberg (DE); EBERT, Christian, 65934 Frankfurt (DE)
(74) Vertreter: Fresenius Kabi Deutschland GmbH
(86) Internationale Anmeldenummer: PCT/EP2014/069492
(87) Internationale Veröffentlichungsnummer: WO 2015/036536

(56) Entgegenhaltungen:
- EP-A2- 0 228 751
- EP-A2- 0 588 028
- WO-A1-2004/091472
- WO-A1-2008/081274
- WO-A1-2009/019527
- GB-A- 2 495 741
- US-A- 5 409 125
- US-A- 5 901 865

## Beschreibung

Die Erfindung betrifft eine Kombination einer Ampulle für eine medizinische Flüssigkeit mit einer Entnahmeeinrichtung.

Eine derartige Ampulle umfasst einen Ampullenkörper zum Aufnehmen einer medizinischen Flüssigkeit und ein entlang einer Längserstreckungsrichtung erstrecktes, an dem Ampullenkörper anschließendes Anschlussteil zum Anschließen einer Entnahmeeinrichtung, vorzugsweise einer Spritze, an die Ampulle.

Solche Ampullen dienen zum Aufbewahren, Zubereiten und/oder Transportieren von medizinischen Flüssigkeiten und können in unterschiedlichen Größen, beispielsweise mit einem Volumen zwischen 5 ml und 30 ml, zur Verfügung stehen. Bei einer in einer solchen Ampulle enthaltenen medizinischen Flüssigkeit kann es sich beispielsweise um einen medizinischen Wirkstoff, beispielsweise ein Medikament oder eine andere Flüssigkeit, die für medizinische Zwecke zum Einsatz kommt, handeln. Aus der Ampulle kann die medizinische Flüssigkeit beispielsweise zur Verabreichung einer Infusion oder einer Injektion oder für die klinische Ernährung oder zu einem anderen Einsatzzweck entnommen werden, um einem Patienten zugeführt zu werden.

Herkömmliche Ampullen werden mittels des sogenannten Blow-Fill-Seal-Verfahrens (BFS) hergestellt. Beim Blow-Fill-Seal-Verfahren handelt es sich um ein Verfahren, das insbesondere zum Herstellen von Behältnissen zum Aufnehmen von Flüssigkeiten Verwendung findet. Beim Blow-Fill-Seal-Verfahren wird ein Behältnis in einem ununterbrochenen Prozess in einer abgeschlossenen Umgebung innerhalb einer Maschine geformt, befüllt und verschlossen, ohne dass hierfür ein Eingriff durch einen Bediener erforderlich ist. Im Rahmen des Blow-Fill-Seal-Verfahrens wird in der Regel ein Kunststoffwerkstoff vertikal extrudiert, um einen rohrförmigen Abschnitt herzustellen, der sodann in einem Werkzeug geformt und befüllt und anschließend verschlossen wird. Aufgrund der Formung des Behältnisses, insbesondere in einer keimarmen Umgebung, eignet sich das Blow-Fill-Seal-Verfahren insbesondere zum Herstellen von Ampullen zum Aufnehmen von medizinischen Flüssigkeiten.

Ampullen dieser Art sind beispielsweise aus der US 4,671,763 und der WO 2011/075798 A1 bekannt.

US 5,409,125 zeigt einen Einzeldosisbehälter, an den eine Spritze mit einem Luer-Lock-Anschluss angeschlossen werden kann.

WO 2004/091472 A1 zeigt eine Ampulle aus Kunststoff mit einer Eintrittsstelle für Luft, bestehend aus mindestens einem Ringkanal.

Ampullen dieser Art sind, wie dies in der US 4,671,763 und der WO 2011/075798 beschrieben ist, herkömmlich durch ein Abbrechteil verschlossen, das in einem Ausgangszustand bei nicht geöffneter Ampulle mit einem Anschlussteil eines Ampullenkörpers verbunden ist. Zum Öffnen der Ampulle und zum Entnehmen der darin enthaltenen medizinischen Flüssigkeit kann das Abbrechteil abgebrochen werden, so dass eine geeignete Entnahmeeinrichtung, beispielsweise eine Spritze, an das Anschlussteil der Ampulle angesetzt und darüber die in der Ampulle enthaltene medizinische Flüssigkeit entnommen werden kann. Beispielsweise wird hierzu ein Spritzenkonus einer Spritze in eine Öffnung des Anschlussteils eingeführt, um über den Spritzenkonus die medizinische Flüssigkeit aus dem Inneren der Ampulle herauszufördern.

Es besteht ein Bedürfnis nach Ampullen, die ein einfaches Ansetzen einer Entnahmeeinrichtung an ein Anschlussteil bei möglichst dichtem Übergang zwischen der Entnahmeeinrichtung und der Ampulle ermöglichen und einen definierten Ansetzzustand bereitstellen können.

Aufgabe der vorliegenden Erfindung ist es, eine Kombination einer Ampulle und einer Entnahmeeinrichtung bereitzustellen, die ein einfaches Ansetzen einer Entnahmeeinrichtung ermöglicht, dabei einen dichten Übergang zwischen einem Anschlussteil und der Entnahmeeinrichtung schafft, einfach und kostengünstig herzustellen ist und einen definierten Ansetzzustand für die Entnahmeeinrichtung an der Ampulle bereitstellen kann.

Diese Aufgabe wird durch einen Gegenstand mit den Merkmalen des Anspruchs 1 gelöst. Die Erfindung wird beschrieben durch eine Ampulle für eine medizinische Flüssigkeit, die mittels des Blow-Fill-Seal-Verfahrens hergestellt ist, mit einem Ampullenkörper zum Aufnehmen einer medizinischen Flüssigkeit, einem entlang einer Längserstreckungsrichtung erstreckten, an den Ampullenkörper anschließenden Anschlussteil zum dichtenden Anschließen einer Entnahmeeinrichtung mit einem Luer-Konus an die Ampulle und einem Abbrechteil, das einstückig mit dem Anschlussteil ausgebildet und über eine Sollbruchstelle mit dem Anschlussteil verbunden ist. Das Anschlussteil ist einstückig mit dem Ampullenkörper geformt und weist einen Gewindeabschnitt mit mindestens zwei daran angeordneten Gewindegängen, die entlang der Längserstreckungsrichtung axial zueinander versetzt sind, auf.

Die Erfindung kann auch allgemein beschrieben werden durch eine Ampulle für eine medizinische Flüssigkeit, mit einem Ampullenkörper zum Aufnehmen einer medizinischen Flüssigkeit und einem entlang einer Längserstreckungsrichtung erstreckten, an den Ampullenkörper anschließenden Anschlussteil zum Anschließen einer Entnahmeeinrichtung an die Ampulle, wobei das Anschlussteil einstückig mit dem Ampullenkörper geformt ist und einen Gewindeabschnitt mit mindestens zwei daran angeordneten Gewindegängen, die entlang der Längserstreckungsrichtung axial zueinander versetzt sind, aufweist.

Demnach ist das Anschlussteil einstückig mit dem Ampullenkörper geformt und weist einen Gewindeabschnitt mit mindestens zwei daran angeordneten Gewindegängen, die entlang der Längserstreckungsrichtung axial zueinander versetzt sind, auf.

Die vorliegende Erfindung geht von dem Gedanken aus, an dem Anschlussteil einstückig mit dem Ampullenkörper einen sogenannten Luer-Lock-Anschluss bereitzustellen, über den eine Entnahmeeinrichtung an die Ampulle angeschlossen werden kann. Dadurch, dass an das Anschlussteil der Ampulle einstückig zwei (oder mehr) Gewindegänge angeformt sind, kann ein definierter Anschlag bereitgestellt werden, der bei Herstellung einer Luer-Lock-Verbindung mit einer zugeordneten Entnahmeeinrichtung, beispielsweise einer Spritze, einen Ansetzzustand definiert, in dem die Entnahmeeinrichtung in definierter Weise an das Anschlussteil angesetzt ist und beispielsweise ein männlicher Luer-Lock-Anschluss der Entnahmeeinrichtung in definierter Weise vollständig auf das den hier weiblichen Luer-Lock-Anschluss bereitstellende Anschlussteil aufgeschraubt ist.

Unter einem Luer-Lock wird ein genormtes Verbindungssystem für Anschlüsse im medizinischen Bereich verstanden. Es kann unter anderem Anwendung finden zur Verbindung von Kanülen, Spritzen, Kathetern, Dreiwegehähnen oder Infusionsschläuchen. Eine Dichtung wird hierbei hergestellt durch einen sogenannten Luer-Konus an einem Verbindungsteil (das auch als männliches Verbindungsteil bezeichnet wird), der in einen zugeordneten Innenkonus an einem anderen Verbindungsteil (auch als weibliches Verbindungsteil bezeichnet) eingesetzt werden kann und in eingesetztem Zustand einen dichtenden Übergang zwischen den Verbindungsteilen herstellt. Das eine Verbindungsteil weist zudem eine Überwurfmutter auf, die auf ein Gewinde des anderen Verbindungsteils mittels z.B. einer halben Drehung aufgeschraubt werden kann, um in aufgeschraubtem Zustand eine feste, aber lösbare Verbindung zwischen den Verbindungsteilen herzustellen.

Bei der hier vorgeschlagenen Ampulle verwirklicht das Anschlussteil der Ampulle ein (weibliches) Verbindungsteil der Luer-Lock-Verbindung, während die Entnahmeeinrichtung ein anderes (männliches) Verbindungsteil bereitstellt. Eine Überwurfmutter der Entnahmeeinrichtung kann auf den vorzugsweise zwei Gewindegänge aufweisenden Gewindeabschnitt des Anschlussteils aufgeschraubt werden, so dass in aufgeschraubtem Zustand eine feste Verbindung zwischen der Ampulle und der Entnahmeeinrichtung geschaffen ist, bei der durch Einsetzen des Luer-Konus (an der Entnahmeeinrichtung) in den Innenkonus (des Anschlussteils) ein dichtender Übergang zwischen der Ampulle und der Entnahmeeinrichtung geschaffen wird.

Dadurch, dass das Anschlussteil mit seinem Gewindeabschnitt einstückig mit dem Ampullenkörper geformt ist, ergibt sich eine einfache, kostengünstige Herstellung. Durch das Bereitstellen von mindestens zwei an dem Gewindeabschnitt des Anschlussteils angeordneten Gewindegängen ergibt sich eine vorteilhafte Verbindung des Anschlussteils mit einer zugeordneten Überwurfmutter einer Entnahmeeinrichtung. Insbesondere ergibt sich ein definierter Ansetzzustand bei vollständig aufgeschraubter Überwurfmutter, was eine für einen Nutzer einfache, fehlerunanfällige Handhabbarkeit ermöglicht.

Der Ampullenkörper und das einstückig damit geformte Anschlussteil ist vorteilhafterweise mittels des Blow-Fill-Seal-Verfahrens hergestellt. Im Rahmen des Blow-Fill-Seal-Verfahrens, das in der Regel mehrschrittig abläuft, wird ein Kunststoffwerkstoff unter Erhitzung extrudiert, um ein Rohr zu schaffen. Dieses extrudierte Rohr wird in ein zweiteiliges Werkzeug eingesetzt und abgeschnitten. In vorzugsweise keimarmer Umgebung wird dann mittels einer geeigneter Füllnadel das extrudierte Rohr aufgebläht ("Blow"), um den Ampullenkörper zu formen, und sodann wird der Container mit einer (medizinischen) Flüssigkeit befüllt ("Fill") und durch ein geeignetes Formungswerkzeug verschlossen ("Seal"). Weil alle Schritte innerhalb einer keimarmen Umgebung ablaufen können und insbesondere das Befüllen und Verschließen der Ampulle in geschützter Weise vor sich gehen, ergibt sich ein Prozess, der in robuster, einfacher, zuverlässiger Weise ein Abfüllen von pharmazeutischen Flüssigkeiten in Ampullen ermöglicht.

Die Ampulle mit ihrem Ampullenkörper und ihrem Anschlussteil kann beispielsweise aus Polyethylen (PE) oder Polypropylen (PP) hergestellt sein.

Vorzugsweise weist jeder Gewindegang zwei Gewindegangabschnitte auf, die an diametral gegenüberliegenden Seiten des Gewindeabschnitts angeordnet sind. Jeder Gewindegang ist somit aus zwei einzelnen Gewindegangabschnitten zusammengesetzt. Ein erster Gewindegangabschnitt erstreckt sich an einer ersten Seite des Gewindeabschnitts, während ein zweiter Gewindegangabschnitt sich an einer (bezogen auf die Längserstreckungsrichtung des Anschlussteils) gegenüberliegenden Seite des Gewindeabschnitts erstreckt und den ersten Gewindegang zur Bereitstellung eines umlaufenden Gewindegangs fortsetzt. Es ergeben sich somit zwei Gewindegänge, die jeweils aus zwei Gewindegangabschnitten zusammengesetzt sind, so dass an dem Gewindeabschnitt des Anschlussteils insgesamt vier Gewindegangabschnitte angeordnet sind.

Die Ampulle weist weiter ein Abbrech- oder Abdrehteil auf, das in einem Ausgangszustand bei verschlossener Ampulle einstückig mit dem Anschlussteil ausgebildet und über eine Sollbruchstelle mit dem Anschlussteil verbunden ist. Das Abbrechteil kann durch Abbrechen oder Abdrehen in einfacher Weise von dem Anschlussteil entfernt werden und verschließt in dem Ausgangszustand eine Öffnung des Anschlussteils, über die bei geöffneter Ampulle die in dem Ampullenkörper enthaltene medizinische Flüssigkeit entnommen werden kann. Die Sollbruchstelle kann beispielsweise durch eine zwischen dem Anschlussteil und dem Abbrechteil umlaufende Einkerbung oder eine Reduzierung der Wandungsstärke gebildet sein. In einer bevorzugten Ausgestaltung wird die Sollbruchstelle ausschließlich über eine Ringsollbruchstelle bereitgestellt, die sich über den Umfang der Öffnung in dem Anschlussteil erstreckt. Insbesondere ist das Abbrech- oder Abdrehteil vor dem Abbrechen oder Abdrehen ausschließlich über diese Ringsollbruchstelle an dem Anschlussteil oder an dem Ampullenkörper befestigt.

Das Abbrechteil trägt vorzugsweise eine Kennzeichnung, die als Öffnung in dem Abbrechteil oder als von einem Grundkörper des Abbrechteils vorstehende, erhabene oder vertiefte Prägung ausgebildet sein kann. Mittels der Kennzeichnung, die beispielsweise die Form eines Pfeils aufweisen kann, kann ein sogenanntes Originalitätszeichen bereitgestellt werden, das einem Nutzer anzeigt, dass es sich bei dem mit dem Anschlussteil verbundenen Abbrechteil um ein originales Teil handelt und sich die verschlossene Ampulle somit in ihrem originalen Ausgangszustand befindet, zwischenzeitlich also nicht geöffnet oder verschlossen worden ist.

Das Abbrechteil ist in dem Ausgangszustand bei nicht geöffneter Ampulle einstückig mit dem Anschlussteil verbunden. Das Abbrechteil erstreckt sich dabei vorzugsweise entlang der Längserstreckungsrichtung nicht über die Sollbruchstelle hinaus und steht somit über die Sollbruchstelle hinaus nicht in Richtung des Anschlussteils vor. Insbesondere weist das Abbrechteil vorzugsweise keine Flügel auf, die sich parallel zur Längserstreckungsrichtung seitlich am Anschlussteil erstrecken und eine zusätzliche Verbindung zwischen dem Abbrechteil und dem Anschlusssteil herstellen.

Dadurch, dass das Abbrechteil nur über seine Sollbruchstelle, die sich vorzugsweise in einer Ebene quer zur Längserstreckungsrichtung des Anschlussteils erstreckt, mit dem Anschlussteil verbunden ist, kann das Abbrechteil zum Öffnen der Ampulle in einfacher Weise von dem Anschlussteil gelöst werden. Es ergibt sich nach Abbrechen des Abbrechteils eine definierte Schnittstelle mit sauberer Trennkannte an dem Anschlussteil, an das eine geeignete Entnahmeeinrichtung in einfacher, dichtender Weise angesetzt werden kann.

Der Ampullenkörper weist im Querschnitt quer zur Längserstreckungsrichtung vorzugsweise eine ovale Form auf. Dabei weist der Ampullenkörper vorteilhafterweise im Querschnitt quer zur Längserstreckungsrichtung eine Breite auf, die kleiner oder gleich einer Tiefe des Ampullenkörpers ist. Die Breite wird hierbei gemessen entlang einer Breitenrichtung zwischen beidseitig des Ampullenkörpers angeordneten Verbindungsstegen zur Verbindung mit anderen Ampullen, während die Tiefe entlang einer Tiefenrichtung, die sich quer zur Breitenrichtung erstreckt, gemessen wird. Die Ampulle weist somit an ihrem Ampullenkörper eine größere Tiefe als Breite auf, was eine vorteilhafte Kollabierbarkeit des Ampullenkörpers bewirken kann und insbesondere zudem eine Reduktion der Ampullenhöhe ermöglicht. Es ergibt sich ein tieferer Schwerpunkt der Ampulle und daraus resultierend eine gute Standfestigkeit. Zudem ergibt sich bei miteinander verbundenen Ampullen (sogenanntes Rack von Ampullen) eine reduzierte Gesamtbreite.

An seiner dem Anschlussteil abgewandten Seite weist der Ampullenkörper vorzugsweise einen Boden auf, an dem eine Standfläche ausgebildet ist, auf die die Ampulle gestellt werden kann. Der Boden kann hierbei zumindest abschnittsweise flach ausgebildet sein, um auf diese Weise eine Standfläche bereitzustellen. Denkbar ist dabei auch, dass sich der Boden zumindest abschnittsweise ins Innere des Ampullenkörpers hineinwölbt, so dass der Boden an seinem Übergang in die seitlichen Wandungen des Ampullenkörpers einen ringförmigen Flächenabschnitt zur Bereitstellung eines Standrings ausbildet, auf den die Ampulle gestellt werden kann.

Das Anschlussteil weist eine Öffnung auf, in die ein Spritzenkonus einer Entnahmeeinrichtung dichtend eingesteckt werden kann. Das Anschlussteil verwirklicht auf diese Weise zusammen mit seinen mindestens zwei an dem Gewindeabschnitt angeordneten Gewindegängen einen (weiblichen) Luer-Lock-Anschluss, an den eine Entnahmeeinrichtung, beispielsweise eine Spritze mit einem geeigneten Gegenstück angesetzt werden kann, wobei durch Einsetzen eines Spritzenkonus der Entnahmeeinrichtung in die Öffnung des Anschlussteils und optional durch Verschrauben einer Überwurfmutter, insbesondere eines männlichen Luer-Lock-Anschlusses, der Entnahmeeinrichtung mit dem Gewindeabschnitt des Anschlussteils eine feste Verbindung zwischen der Entnahmeeinrichtung und dem Anschlussteil bei dichtem Übergang zwischen dem Anschlussteil und der Entnahmeeinrichtung geschaffen werden kann.

Die Öffnung des Anschlussteils verjüngt sich hierbei vorzugsweise konisch entlang der Längserstreckungsrichtung und verjüngt sich dabei in das Anschlussteil hinein, so dass der Spritzenkonus der Entnahmeeinrichtung in die Öffnung eingesetzt werden kann und beim Einsetzen flächig in Anlage mit der kegelförmigen Innenwandung der Öffnung gelangt. Insbesondere bildet die kegelförmige Innenwandung der Öffnung eine Dichtfläche entlang der Längsachse (L) über einen Bereich von mindestens 0,5 mm, vorzugsweise von mindestens 1 mm. In einer Ausführungsform beträgt dieser Bereich 0,5 mm bis 5 mm, vorzugsweise 1 mm bis 3 mm oder 4 mm. Es wird sozusagen eine Dichtfläche und nicht lediglich eine Dichtlippe bereitgestellt.

Insbesondere in einem vollständig angeschlossen Zustand der Entnahmeeinrichtung, beispielsweise einer Spritze, befindet sich der angeschlossene oder hier eingeführte Konus der Entnahmevorrichtung, beispielsweise der Spritzenkonus, ausschließlich in dem Anschlussteil. Er erstreckt sich nicht in den Ampullenkörper hinein. Dadurch kann bei der Entnahme die Restflüssigkeit reduziert und gegebenenfalls die Flüssigkeit sogar im Wesentlichen vollständig aus der Ampulle entnommen werden.

In einer weiteren Ausgestaltung kann die Ampulle auch eine Beschichtung aufweisen, die eine Permeation durch das Ampullenmaterial verhindern oder zumindest reduzieren soll. Die Beschichtung dient beispielsweise zum Bereitstellen einer Sauerstoffbarriere, einer Wirkstoffbarriere und/oder einer Wasserdampfbarriere. Dadurch kann dem Eindringen von Sauerstoff, dem Verlust von Wirkstoffen und/oder dem Verlust von Wasserdampf entgegengewirkt werden. Eine solche Beschichtung kann insbesondere auf eine Innenseite oder eine Außenseite der Ampulle aufgebracht werden und kann beispielsweise unter Verwendung von Werkstoffen wie Metallocene, EVOH oder eines Oxydwerkstoffs (z.B. SiOx) hergestellt werden.

Anstelle eines Aufbringens einer Beschichtung auf den Ampullenkörper ist es auch möglich, einen geeigneten Werkstoff, der eine gewünschte Barriere, insbesondere eine Sauerstoffbarriere bereitstellen kann, bereits in den Werkstoff des Ampullenkörpers einzubringen oder einzubetten, so dass die, vorzugsweise mittels Blow-Fill-Seal-Verfahren hergestellte, Ampulle selbst geeignete Barriereeigenschaften aufweist.

Alternativ hierzu ist auch möglich, eine Ampulle der hier beschriebenen Art in eine beispielsweise sauerstoffdichte Umverpackung einzubringen, so dass über eine solche Umverpackung zumindest eine Sauerstoffbarriere bereitgestellt werden kann.

Bei einer Ampullenanordnung mit mehreren Ampullen sind die Ampullen vorzugsweise über Verbindungsstege einstückig miteinander verbunden. Zwischen jeweils zwei Ampullen befindet sich hierbei ein Verbindungssteg, der sich axial parallel zur Längserstreckungsrichtung zwischen den Ampullenkörpern der Ampullen erstreckt und eine einstückige Verbindung der zugeordneten Ampullen miteinander herstellt. Beidseitig einer jeden Ampulle können hierbei weitere Ampullen angeordnet sein, so dass an jeder Ampulle diametral gegenüberliegend zwei Verbindungsstege angeordnet sein können, über die beidseitig der Ampulle weitere Ampullen an den Ampullenkörper der Ampulle angebunden sind.

Über einen zwischen zwei Ampullen erstreckten Verbindungssteg wird somit eine einstückige Verbindung zwischen den Ampullen geschaffen. Um hierbei ein einfaches Lösen der Ampullen voneinander zu ermöglichen, kann an einem oder an beiden axialen Enden des Verbindungsstegs (oben und/oder unten am Ampullenkörper) ein Einschnitt vorgesehen sein, der sich spitz zulaufend in den Verbindungssteg hinein erstreckt und bewirkt, dass die Ampullen in leichter Weise ohne großen Kraftaufwand voneinander getrennt werden können. Durch geeignete Formgebung des Verbindungsstegs, an dem beispielsweise eine Trennlinie durch eine gezielte Reduzierung der Materialstärke entlang einer zwischen den Ampullenkörpern verlaufenden Linie bereitgestellt werden kann, können die Ampullen dann in einfacher, definierter Weise voneinander getrennt werden, wobei sich nach dem Trennen definierte Trennflächen an den Ampullenkörpern der Ampullen ergeben.

Vorzugsweise sind die Abbrechteile nebeneinander angeordneter Ampullen nicht miteinander verbunden. Zwei nebeneinander angeordnete Ampullen sind somit lediglich über den zwischen den Ampullenkörpern verlaufenden Verbindungssteg miteinander verbunden, nicht aber über ihre Abbrechteile. Die Abbrechteile liegen damit getrennt voneinander vor. Dies hat zur Folge, dass die Ampullen in einfacher Weise ohne großen Kraftaufwand voneinander getrennt werden können, ohne dass beim Trennen die Gefahr besteht, dass - unbeabsichtigt - ein Abbrechteil von einer Ampulle abgebrochen wird.

Bei einer Kombination einer Ampulle nach der voranstehend beschriebenen Art mit einer Entnahmeeinrichtung ist ein an einem Spritzenkörper der Entnahmeeinrichtung angeordneter Spritzenkonus formschlüssig in eine Öffnung eines Anschlussteils der Ampulle einsteckbar, so dass in eingestecktem Zustand der Spritzenkonus formschlüssig in der Öffnung einliegt und zudem über eine Überwurfmutter der Entnahmeeinrichtung eine verschraubte Verbindung mit dem Gewindeabschnitt des Anschlussteils hergestellt werden kann.

Eine derartige Ampulle dient beispielsweise zum Aufbewahren eines medizinischen Wirkstoffs, insbesondere eines Medikaments oder einer anderen Flüssigkeit, vorzugsweise einer Infusionslösung, die für medizinische Zwecke zum Einsatz kommt, beispielsweise Magnesium, Kalziumchlorid, Kaliumchlorid, Natriumchlorid, Glukose, steriles Wasser, Nährstoffe für die parenterale Ernährung oder dergleichen.

Der der Erfindung zugrundeliegende Gedanke soll nachfolgend anhand der in den Figuren dargestellten Ausführungsbeispiele näher erläutert werden. Es zeigen:
- Fig. 1: eine perspektivische Ansicht einer Ampullenanordnung mit mehreren miteinander verbundenen Ampullen;
- Fig. 2A: eine Vorderansicht der Anordnung gemäß Fig. 1;
- Fig. 2B: eine Seitenansicht der Anordnung gemäß Fig. 1;
- Fig. 2C: eine Draufsicht auf die Anordnung gemäß Fig. 1;
- Fig. 3A: eine Seitenansicht einer Ampulle;
- Fig. 3B: eine Projektionsansicht der Ampulle gemäß Fig. 3A;
- Fig. 4: eine andere Seitenansicht der Ampulle;
- Fig. 5: eine perspektivische Ansicht der Ampulle;
- Fig. 6A: eine Draufsicht auf die Ampulle;
- Fig. 6B: eine Ansicht der Ampulle von unten;
- Fig. 7: eine Ansicht der Ampulle bei abgebrochenem Abbrechteil vor Ansetzen einer Entnahmeeinrichtung in Form einer Spritze; und
- Fig. 8: eine Ansicht eines Anschlussteils einer Ampulle in einem anderen Ausführungsbeispiel.

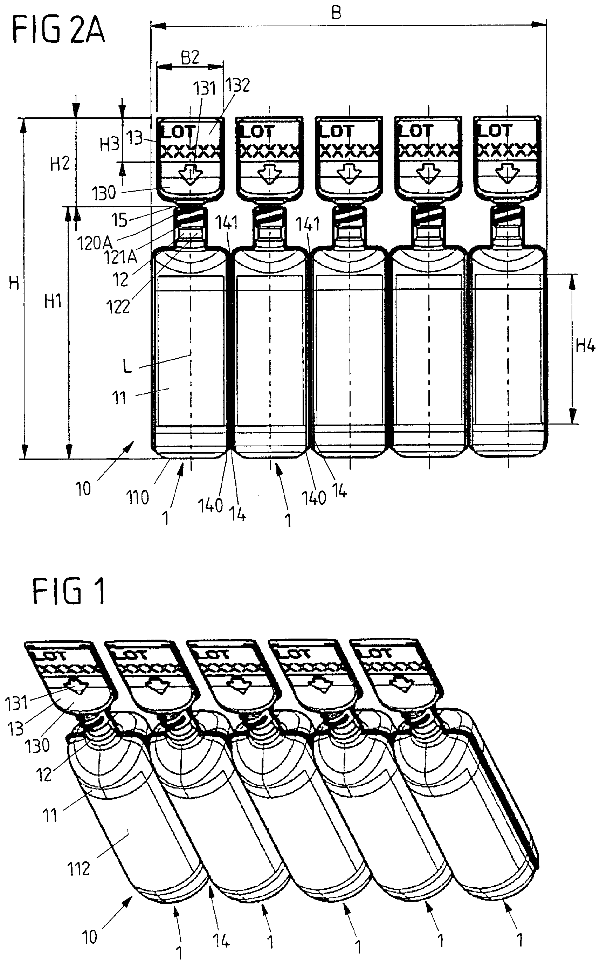

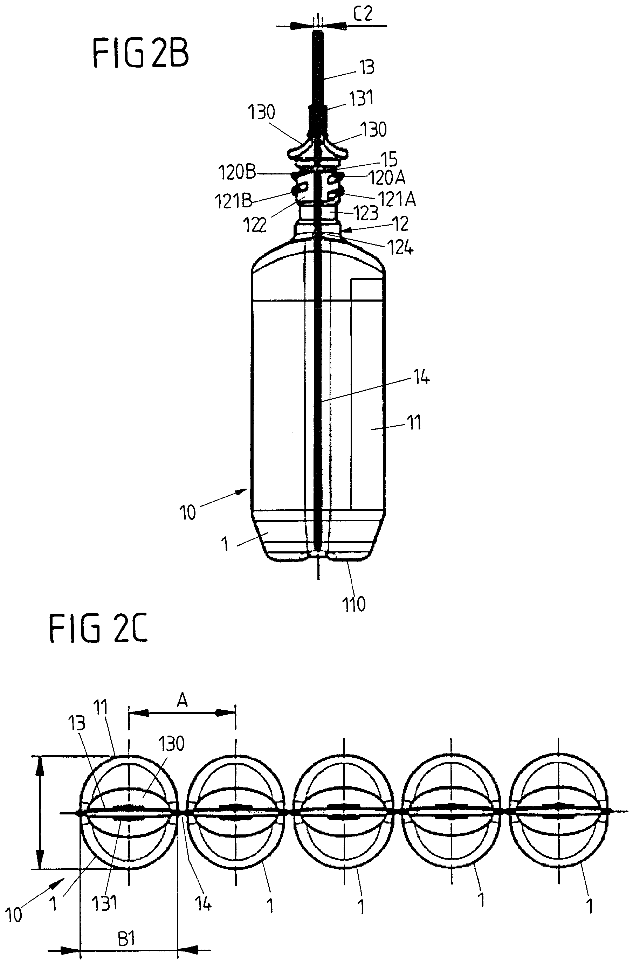

Fig. 1 und Fig. 2A, 2B, 2C zeigen eine Ampullenanordnung 10, die eine Mehrzahl von Ampullen 1 (in dem dargestellten Ausführungsbeispiel fünf Ampullen 1) aufweist und als solche beispielsweise in einer geeigneten Verpackung ausgeliefert oder aufbewahrt werden kann. Die Ampullen 1 dienen zur Aufnahme einer medizinischen Flüssigkeit in einem Ampullenkörper 11 und sind über Verbindungsstege 14 einstückig miteinander verbunden, so dass eine einstückige Einheit geschaffen wird.

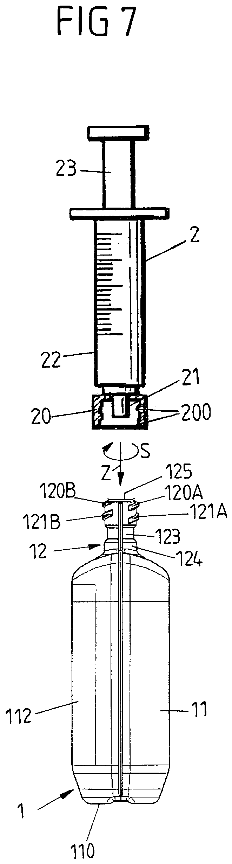

Jede Ampulle 1 weist einen Ampullenkörper 11 und ein daran angeordnetes Anschlussteil 12 auf. Bei nicht geöffneter Ampulle 1 ist mit dem Anschlussteil 12 ein Abbrechteil 13 einstückig verbunden, das einen Zugang zu dem Ampullenkörper 11 in Form einer Öffnung 125 (siehe zum Beispiel Fig. 7) verschließt und darüber bei geschlossener Ampulle 1 den Ampullenkörper 11 nach außen hin abschließt. Das Abbrechteil 13 ist über eine Sollbruchstelle 15 mit dem Anschlussteil 12 verbunden und kann zum Öffnen der Ampulle 1 von dem Anschlussteil 12 abgebrochen oder abgedreht werden. Daher kann das Abbrechteil 13 auch als Abdrehteil bezeichnet werden,

Das Anschlussteil 12 erstreckt sich im Wesentlichen zylindrisch entlang einer Längserstreckungsrichtung L von dem Ampullenkörper 11. Das Anschlussteil 12 schließt mit einem Halsabschnitt 124 (siehe zum Beispiel Fig. 2B) an den Ampullenkörper 11 an, geht dann in einen gegenüber dem Halsabschnitt 124 in seinem Durchmesser geringfügig reduzierten Halsabschnitt 123 über, an den wiederum ein Gewindeabschnitt 122 mit daran angeordneten Gewindegangabschnitten 120A, 120B, 121A, 121B anschließt. Über die um die Längserstreckungsrichtung L umlaufende Sollbruchstelle 15 ist das Abbrechteil 13 einstückig mit dem Gewindeabschnitt 122 verbunden.

Vorzugsweise ist das Anschlussteil 12 entlang der Längsachse Z derart bemessen, dass sich die Stirnfläche eines Spritzenkonus 21, insbesondere gemäß Luer-Standard, im vollständig angeschlossenen Zustand der Spritze 2 maximal bis etwa zur Höhe des Halsabschnitts 124 des Anschlussteils 12 erstreckt. Im vollständig angeschlossenen Zustand der Spritze 2 befindet sich somit der Spritzenkonus 21 nur im Anschlussteil 12. Er erstreckt sich nicht in den Ampullenkörper 11 hinein.
Die Gewindegangabschnitte 120A, 120B, 121A, 121B bilden zwei Gewindegänge an dem Gewindeabschnitt 122 aus. Jeder Gewindegang wird hierbei durch zwei Gewindegangabschnitte 120A, 121B bzw. 120B, 121A geschaffen, wobei die Gewindegänge axial zueinander versetzt sind. So ist der Gewindegangabschnitt 120A axial versetzt zum Gewindegangabschnitt 121A, während der Gewindegangabschnitt 120B axial versetzt ist zum Gewindegangabschnitt 121B. Die Gewindegangabschnitte 120A, 121B bzw. 120B, 121A, die jeweils einen Gewindegang ausbilden, sind an diametral gegenüberliegenden Seiten des Gewindeabschnitts 122 angeordnet, wobei die Gewindegangabschnitte 120A, 121B bzw. 120B, 121A einander fortsetzen und dadurch einen funktional durchgehenden Gewindegang schaffen, auf den eine zugeordnete Überwurfmutter mit einem entsprechenden Gewinde aufgeschraubt werden kann.

Dadurch, dass an dem Gewindeabschnitt 122 zwei Gewindegänge 120A, 121B und 120B, 121A bereitgestellt werden, kann eine Entnahmeeinrichtung 2 beispielsweise in Form einer Spritze in definierter Weise mit einer Überwurfmutter 20 an den Gewindeabschnitt 122 des Anschlussteils 12 aufgeschraubt werden, so dass eine definierte Verbindung zwischen der Entnahmeeinrichtung 2 und dem Anschlussteil 12 hergestellt werden kann.

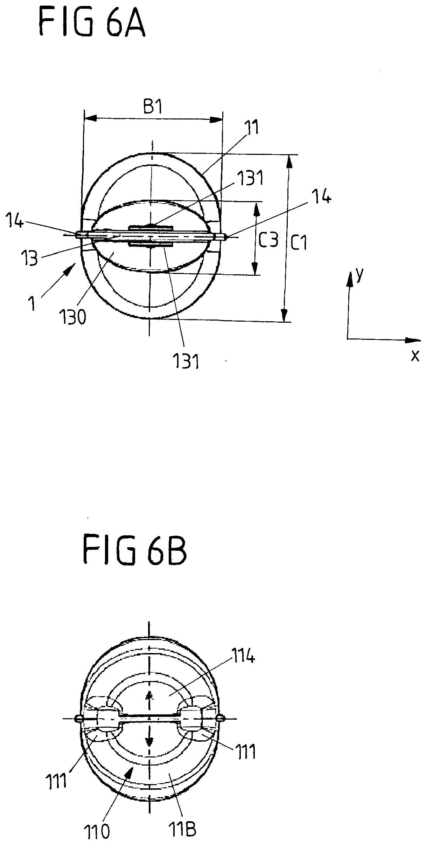

Jede Ampulle 1 weist einen Boden 110 auf, der zumindest abschnittsweise derart flach ausgebildet ist, dass eine Standfläche bereitgestellt wird, auf die jede Ampulle einzeln oder die Ampullenanordnung 10 insgesamt gestellt werden kann, so dass sich eine vergleichsweise hohe Standfestigkeit für die Ampulle 1 bzw. die Ampullenanordnung 10 ergibt. Wie sich aus der Unteransicht einer einzelnen Ampulle 1 gemäß Fig. 6B ergibt, sind am Boden 110 Einziehungen 111 ausgebildet, die einen eine Standfläche ausbildenden Standring 113 unterbrechen. Der Standring 113 umgibt eine Vertiefung 114, mit der der Boden 110 abschnittsweise in das Innere des Ampullenkörpers 11 hineingewölbt ist.

Das Abbrechteil 13 bildet ein das Anschlussteil 12 verschließendes Kappenelement aus. Das Abbrechteil 13 weist dabei eine Griffbegrenzung 130 (siehe Fig. 2B) auf, die verhindern soll, dass ein Nutzer mit seinen Fingern, mit denen er das Abbrechteil 13 zum Abbrechen greift, hin zum Anschlussteil 12 rutschen kann. Auf diese Weise wird verhindert, dass ein Nutzer bei einem Abbrechen mit dem Anschlussteil 12 in Berührung kommen kann, so dass eine die Sterilität beeinträchtigende Verunreinigung am Anschlussteil 12 vermieden wird.

Am Abbrechteil 13 ist weiter eine Kennzeichnung 131 in Form einer Prägung vorgesehen, die erhaben von dem Abbrechteil 13 vorsteht und die Form eines Pfeils aufweist. Die Kennzeichnung kann beispielsweise als Originalitätszeichen dienen, um anzuzeigen, dass es sich bei dem Abbrechteil 13 um ein Originalteil handelt.

Das Abbrechteil 13 weist weiter eine Anzeigefläche 132 auf, die zur Beschriftung der Ampulle 1 dienen kann, um beispielsweise eine Chargennummer (engl. "Lot") anzugeben. Am Ampullenkörper 11 ist eine Anzeigenfläche 112 vorgesehen, auf der beispielsweise Details zur in den Ampullen 1 enthaltenen medizinischen Flüssigkeit, beispielsweise Name, Verwendungszweck, Dosierung oder dergleichen, angegeben werden können.

Die Ampullenanordnung 10 wird einstückig hergestellt, wobei die einzelnen Ampullen 1 mittels des Blow-Fill-Seal-Verfahrens in einem gemeinsamen Formungswerkzeug geformt und gefüllt werden. Die Ampullenanordnung 10 wird somit in einem einheitlichen Herstellungsverfahren hergestellt, als dessen Verfahrensergebnis sich die Ampullenanordnung 10 ergibt.

Die Ampullen 1 können beispielsweise aus Polypropylen (PP) oder Polyethylen (PE) hergestellt sein. Denkbar sind grundsätzlich aber auch andere Kunststoffmaterialien, die zur Herstellung einer Kunststoffampulle zum Aufbewahren medizinischer Flüssigkeiten geeignet sind.

Um beispielsweise im Rahmen einer Infusion oder Injektion oder zur enteralen Ernährung eines Patienten eine in einer Ampulle 1 enthaltene Flüssigkeit zuzuführen, ist eine Ampulle 1 von den anderen Ampullen 1 der Ampullenanordnung 10 zu trennen und sodann das Abbrechteil 13 von dem Anschlussteil 12 der Ampulle 1 zu lösen. Die Trennung einer Ampulle 1 von den übrigen Ampullen 1 der Ampullenanordnung 10 erfolgt hierbei dadurch, dass die Ampulle entlang des Verbindungsstegs 14, über den die Ampulle 1 mit einer benachbarten Ampulle 1 verbunden ist, von der benachbarten Ampulle 1 getrennt wird, wobei hierzu an den axialen Enden des Verbindungsstegs V-förmige Einschnitte 140, 141 vorgesehen sind, die ein Trennen der Ampullen 1 voneinander vereinfachen und insbesondere ein einfaches Einreißen des Verbindungsstegs 14 ermöglichen.

Die Ampullen 1 der Ampullenanordnung 10 sind ausschließlich über die Verbindungsstege 14 zwischen den Ampullenkörpern 11 miteinander verbunden. Die Abbrechteile 13 der einzelnen Ampullen 1 hingegen sind nicht (direkt) miteinander verbunden. Zum Lösen einer Ampulle 1 von einer benachbarten Ampulle 1 muss somit lediglich der Verbindungssteg 14 zwischen den Ampullenkörpern 11 getrennt werden. Dadurch, dass die Abbrechteile 13 der Ampullen 1 nicht voneinander gelöst werden müssen, besteht kein Risiko, dass bei einem Trennen der Ampullen 1 unbeabsichtigter Weise ein Abbrechstück 13 von dem zugeordneten Anschlussteil 12 abgebrochen wird.

Zum Entnehmen der medizinischen Flüssigkeit aus dem Ampullenkörper 11 wird sodann das Abbrechstück 13, wie dies in Fig. 7 dargestellt ist, von dem Anschlussteil 12 entfernt, so dass die Öffnung 125 des Anschlussteils 12 freigegeben ist. Eine Entnahmeeinrichtung 12 z.B. in Form einer Spritze kann dann mit einem konischen Spritzenkonus 21 in die Öffnung 125 eingesetzt werden, wobei die Öffnung 125 in entsprechender Weise konisch ausgebildet ist und in eine Ansetzrichtung Z spitz zuläuft, so dass der Spritzenkonus 21 bei Ansetzen in die Ansetzrichtung Z formschlüssig in Anlage mit der Innenwandung der Öffnung 125 gelangt. Die Verbindung der Entnahmeeinrichtung 2 mit der Ampulle 1 kann sodann durch Aufschrauben einer Überwurfmutter 20 in eine Schraubrichtung S auf den Gewindeabschnitt 122 des Anschlussteils 12 gesichert werden, so dass bei angesetzter Entnahmeeinrichtung 2 durch Aufziehen eines Stempels 23 die medizinische Flüssigkeit in einen Spritzenkörper 22 der Entnahmeeinrichtung 2 eingesogen werden kann. Vorzugsweise ist die Länge des Anschlussteils 12 so gewählt, dass sich der Spritzenkonus 21 im vollständig eingesetzten Zustand der Spritze 2 noch innerhalb des Anschlussteils 12 befindet. Der Spritzenkonus 21 erstreckt sich dabei nicht in den Ampullenkörper 11 hinein. Die Stirnfläche des Spritzenkonus 21 befindet noch innerhalb des Halsabschnitts 123 und/oder 124. Dadurch kann die in der Ampulle 1 bei der Flüssigkeitsentnahme verbleibende Restmenge reduziert werden. Beispielsweise besitzt das Anschlussteil 12 eine Länge von 0,5 cm bis 2 cm, vorzugsweise von 0,8 cm bis 1,5 cm.

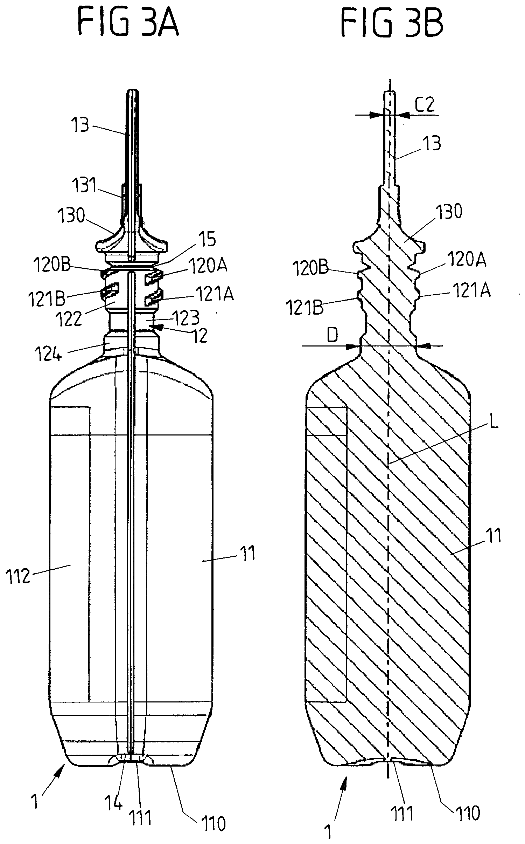

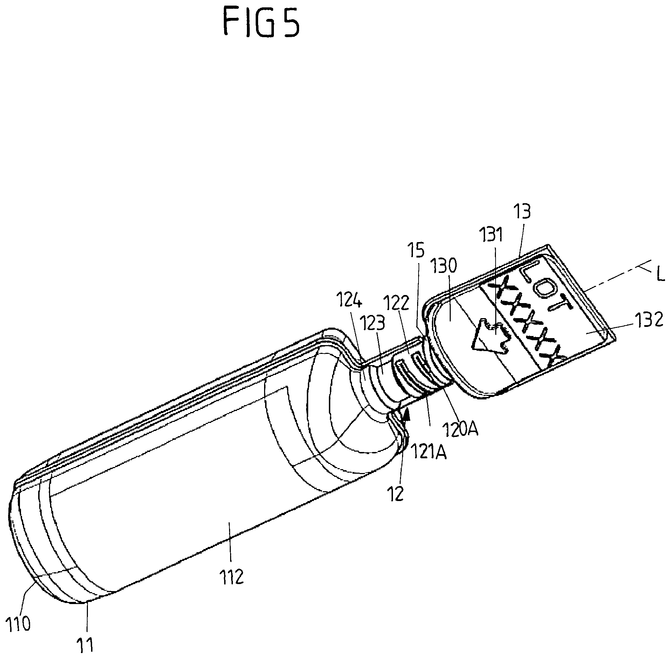

Fig. 3A, 3B bis 6A, 6B zeigen Ansichten einer einzelnen Ampulle 1. Wie beispielsweise aus der Draufsicht gemäß Fig. 6A ersichtlich ist, weist der Ampullenkörper 11 im Querschnitt quer zur Längserstreckungsrichtung L des Anschlussteils 12 eine ovale Grundform auf, bei der die Breite B1 in eine Breitenrichtung X kleiner ist als eine Tiefe C1 in eine Tiefenrichtung Y. Die Breite B1 wird hierbei gemessen zwischen seitlich an dem Ampullenkörper 11 erstreckten, diametral zur Längserstreckungsrichtung L gegenüberliegenden Verbindungsstegen 14, über die die Ampulle 1 mit weiteren Ampullen 1 verbunden sein kann.

Die Ampullenanordnung 10 kann, in Abhängigkeit von der Anzahl der Ampullen 1, beispielsweise eine gesamte Breite B (siehe Fig. 2A) von 80 mm bis 120 mm, vorzugsweise ca. 100 mm, aufweisen. Die Breite B1 des Ampullenkörpers 11 kann beispielsweise 15 mm bis 25 mm, vorzugsweise ca. 18 mm, betragen. Die Breite B2 des Abbrechteils 13 kann 10 mm bis 20 mm, vorzugsweise ca. 16 mm, sein. Das Abbrechteil 13 ist schmaler als der Ampullenkörper 11.

Die Höhe H der Ampulle 1 und somit der Ampullenanordnung 10 insgesamt (siehe Fig. 2A) kann beispielsweise 70 mm bis 100 mm, vorzugsweise ca. 85 mm, betragen. Die Höhe H1 des Ampullenkörpers 11 mit dem daran angeschlossenen Anschlussteil 12 kann dabei 50 mm bis 75 mm, vorzugsweise ca. 62 mm, sein. Die Höhe H2 des Abbrechteils 13 kann 15 mm bis 30 mm, vorzugsweise ca. 22 mm, betragen. Die Anzeigefläche 132 des Abbrechteils 13 kann beispielsweise eine Höhe H3 von 5 mm bis 15 mm, vorzugsweise ca. 10 mm, aufweisen.- Die Anzeigefläche 112 des Ampullenkörpers 11 kann beispielsweise eine Höhe H4 von 20 mm bis 50 mm, vorzugsweise 37 mm, aufweisen.

Die Tiefe C1 des Ampullenkörpers 11 und somit der Ampullenanordnung 10 insgesamt kann beispielsweise 15 mm bis 25 mm, vorzugsweise ca. 21 mm, betragen (siehe zum Beispiel Fig. 2C). Der Abstand A zwischen zwei Ampullen kann beispielsweise 15 mm bis 25 mm, vorzugsweise ca. 19 mm, betragen. Die Breite B1 des Ampullenkörpers 11 kann beispielsweise 15 mm bis 25 mm, vorzugsweise ca. 18 mm, sein.

Die Tiefe C2 des Abbrechstücks 13 kann beispielsweise 1 mm bis 2 mm, vorzugsweise ca. 1,5 mm, betragen (siehe Fig. 2B).

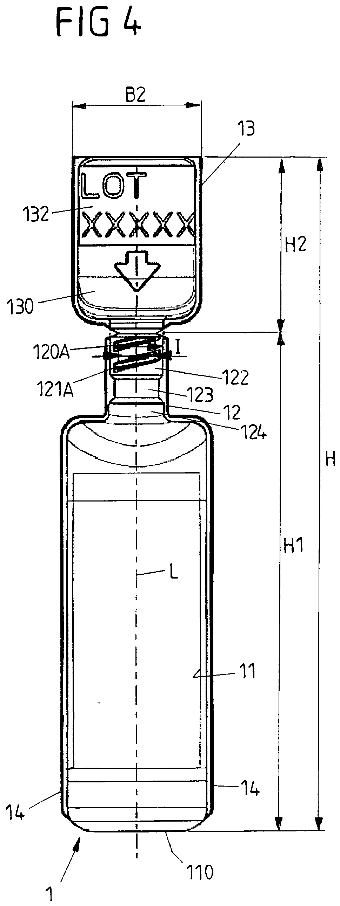

Der an den Ampullenkörper 11 anschließende Halsabschnitt 124 kann beispielsweise einen Durchmesser D von 5 mm bis 10 mm, vorzugsweise ca. 7 mm, aufweisen. Der Innenkonus der Öffnung 125 verjüngt sich von einem Durchmesser I von 6 mm bis 7,5 mm, vorzugsweise ca. 6,7 mm, auf einen Durchmesser I von 4 mm bis 5,5 mm, vorzugsweise ca. 4,7 mm, ins Innere des Anschlussteils 12 hinein (siehe Fig. 3B und Fig. 4).

Das Abbrechteil 13 kann an seiner Griffbegrenzung 130 beispielsweise eine Tiefe C3 (siehe Fig. 6A) von 3 mm bis 9 mm, vorzugsweise ca. 6 mm, aufwiesen.

Die vorangehend genannten Maßangaben sind lediglich beispielhaft zu verstehen und können beispielsweise für eine Ampulle 1 mit einem Fassungsvermögen von 10 ml geeignet sein. Bei einem anderen Fassungsvermögen von zum Beispiel 5 ml, 20 ml oder 30 ml können sich andere Abmessungen ergeben, wobei insbesondere die Maße des Ampullenkörpers 11 skalieren, die Abmessungen des Anschlussteils 12 und des Abbrechteils 13 aber im Wesentlichen beibehalten werden.

Die Ampullen 1 können dabei bei anderem Fassungsvermögen derart skalieren, dass sie eine im Wesentlichen gleiche Gesamthöhe H aufweisen, eine Skalierung somit insbesondere in der Breite B1 und der Tiefe C1 des Ampullenkörpers 11 erfolgt, nicht oder zumindest nur unwesentlich aber in der Höhe H1 des Ampullenkörpers 11.

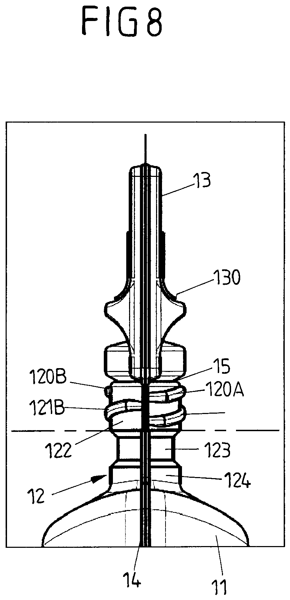

Fig. 8 zeigt einen Ausschnitt eines anderen Ausführungsbeispiels einer Ampulle 1 mit einem gegenüber dem Ausführungsbeispiel gemäß Fig. 1 bis 7 modifizierten Anschlussteil 12, bei dem die durch die Gewindegangabschnitte 120A, 121B bzw. 120B, 121A gebildeten Gewindegänge eine geringfügig andere Form aufweisen. Insbesondere sind die Gewindegangabschnitte 120A, 120B, 121A, 121B an ihren Enden gekrümmt. Dies ermöglicht ein vergleichsweise großes Gewinde bei gleichzeitig guter Entformbarkeit aus einem Herstellungswerkzeug.

Der der Erfindung zugrundeliegende Gedanke ist nicht auf die vorangehend geschilderten Ausführungsbeispiele beschränkt, sondern lässt sich auch bei gänzlich anders gearteten Ausführungsformen verwirklichen.

Insbesondere können die Ampullen einer Ampullenanordnung grundsätzlich auch völlig andere Maße als die hier angegebenen aufweisen. Alle hierin enthaltenen Maßangaben sind lediglich beispielhaft zu verstehen.

Grundsätzlich ist auch denkbar, an einem Anschlussteil mehr als zwei Gewindegängen vorzusehen, wobei die Gewindegänge nicht notwendigerweise aus mehreren Gewindegangabschnitten gebildet sein müssen.

Im Rahmen einer Ampullenanordnung können auch mehr oder weniger als fünf Ampullen miteinander verbunden sein.

### Bezugszeichenliste

- 1: Ampulle
- 10: Ampullenanordnung
- 11: Ampullenkörper
- 110: Boden
- 111: Einziehung
- 112: Anzeigefläche
- 113: Standring
- 114: Vertiefung
- 12: Anschlussteil
- 120A, 120B, 121A, 121B: Gewindegangabschnitt
- 122: Gewindeabschnitt
- 123, 124: Halsabschnitt
- 125: Öffnung
- 13: Abbrechteil
- 130: Griffbegrenzung
- 131: Kennzeichnung
- 132: Anzeigefläche
- 14: Verbindungssteg
- 140, 141: Einschnitt
- 15: Sollbruchstelle oder Ringsollbruchstelle
- 2: Entnahmeeinrichtung (Spritze)
- 20: Überwurfmutter
- 200: Gewinderillen
- 21: Spritzenkonus
- 22: Spritzenkörper
- 23: Stempel
- A: Abstand
- B, B1, B2: Breite
- C1, C2,: Tiefe
- D: Durchmesser
- H, H1-H4: Höhe
- L: Längserstreckungsrichtung
- I: Innendurchmesser
- S: Schraubrichtung
- X: Breitenrichtung
- Y: Tiefenrichtung
- Z: Ansetzrichtung

## Patentansprüche

1. Kombination einer Ampulle (1) für eine medizinische Flüssigkeit und einer Entnahmeeinrichtung (2) mit einem an einem Spritzenkörper (22) angeordneten Spritzenkonus (21),
wobei die Ampulle (1) mittels des Blow-Fill-Seal-Verfahrens hergestellt ist, mit
- einem Ampullenkörper (11) zum Aufnehmen einer medizinischen Flüssigkeit,
- einem entlang einer Längserstreckungsrichtung (L) erstreckten, an den Ampullenkörper anschließenden Anschlussteil (12) zum dichtenden Anschließen einer Entnahmeeinrichtung (2) mit einem Luer-Konus (21) an die Ampulle (1) und
- einem Abbrechteil (13), das einstückig mit dem Anschlussteil (12) ausgebildet und über eine Sollbruchstelle (15) mit dem Anschlussteil (12) verbunden ist,
wobei das Anschlussteil (12) einstückig mit dem Ampullenkörper (11) geformt ist und einen Gewindeabschnitt (122) mit mindestens zwei daran außenseitig angeordneten Gewindegängen (120A, 120B, 121A, 121B), die entlang der Längserstreckungsrichtung (L) axial zueinander versetzt sind, aufweist und
wobei das Anschlussteil (12) der Ampulle (1) eine Öffnung (125) aufweist, in die der Spritzenkonus (21) der Entnahmeeinrichtung (2) dichtend einsteckbar ist und eine Innenwandung der Öffnung (125) eine Dichtfläche entlang der Längserstreckungsrichtung (L) über einen Bereich von mindestens 1 mm bereitstellt und
wobei das Anschlussteil (12) eine Längserstreckung aufweist, sodass sich in einem vollständig angeschlossen Zustand der Entnahmeeinrichtung (2) der Luer-Konus (21) der Entnahmeeinrichtung (2) in dem Anschlussteil der Ampulle (1) befindet und nicht in den Ampullenkörper (11) hinein erstreckt.

2. Kombination nach Anspruch 1, **dadurch gekennzeichnet, dass** jeder Gewindegang (120A, 120B, 121A, 121B) zwei Gewindegangabschnitte (120A, 120B, 121A, 121B) aufweist, die an diametral gegenüberliegenden Seiten des Gewindeabschnitts (122) angeordnet sind.

3. Kombination nach einem der Ansprüche 1 bis 2, **dadurch gekennzeichnet, dass** die Sollbruchstelle (15) ausschließlich über eine Ringsollbruchstelle bereitgestellt ist, die sich über den Umfang einer Öffnung (15) in dem Anschlussteil (12) erstreckt.

4. Kombination nach einem der vorangehenden Ansprüche, **dadurch gekennzeichnet, dass** das Abbrechteil (13) eine Kennzeichnung (131) in Form einer Öffnung oder Prägung aufweist.

5. Kombination nach einem der vorangehenden Ansprüche, **dadurch gekennzeichnet, dass** das Abbrechteil (13) nicht über die Sollbruchstelle (15) hinaus, entlang der Längserstreckungsrichtung (L) betrachtet, in Richtung des Anschlussteils (12) vorsteht.

6. Kombination nach einem der vorangehenden Ansprüche, **dadurch gekennzeichnet, dass** der Ampullenkörper (10) im Querschnitt quer zur Längserstreckungsrichtung (L) eine ovale Form aufweist.

7. Kombination nach Anspruch 6, **dadurch gekennzeichnet, dass** der Ampullenkörper (10) im Querschnitt quer zur Längserstreckungsrichtung (L) ein Breite (B1), gemessen entlang einer Breitenrichtung (X) zwischen beidseitig des Ampullenkörpers angeordneten Verbindungsstegen (14) zur Verbindung mit anderen Ampullen (1), aufweist, die kleiner oder gleich einer quer zur Breitenrichtung (X) entlang einer Tiefenrichtung (Y) gemessenen Tiefe (C1) des Ampullenkörpers (11) ist.

8. Kombination nach einem der vorangehenden Ansprüche, **dadurch gekennzeichnet, dass** der Ampullenkörper (10) an einer dem Anschlussteil (12) abgewandten Seite einen Boden (110) aufweist, der eine Standfläche, auf die die Ampulle (1) gestellt werden kann, ausbildet.

9. Kombination nach einem der vorangehenden Ansprüche, **dadurch gekennzeichnet, dass** der Ampullenkörper (11) kollabierbar ist.

10. Kombination nach einem der vorangehenden Ansprüche, **dadurch gekennzeichnet, dass** die Öffnung (125) entlang der Längserstreckungsrichtung (L) sich, vorzugsweise konisch, verjüngt.

11. Kombination nach einem der vorangehenden Ansprüchen, mit mindestens einer weiteren identischen Ampulle (1), wobei zwei Ampullen (1) über einen Verbindungssteg (14) einstückig miteinander verbunden sind.

12. Kombination nach Anspruch 11, **dadurch gekennzeichnet, dass** der Verbindungssteg (14) sich parallel zur Längserstreckungsrichtung (L) zwischen den Ampullenkörpern (11) der zwei Ampullen (1) axial erstreckt und an mindestens einem axialen Ende des Verbindungsstegs (14) ein axial in den Verbindungssteg (14) hinein weisender Einschnitt (140) angeordnet ist.

13. Kombination nach Anspruch 11 oder 12, **dadurch gekennzeichnet, dass** die Abbrechteile (13) der nebeneinander angeordneten und über den Verbindungsteg (14) miteinander verbundenen Ampullen (1) nicht miteinander verbunden sind.

## Claims

1. Combination of an ampoule (1) for medical liquid and a removal device (2) having an injection cone (21) which is arranged on an injection body (22), wherein the ampoule is produced by means of the blow/fill/seal method, having
- an ampoule body (11) for receiving medical liquid,
- a connection part (12), which extends along a longitudinal extension direction (L) and connects to the ampoule body, for the sealing connection between a removal device (2) with a Luer cone (21) and the ampoule (1) and
- a break-off part (13) which is realized integrally with the connection part (12) and is connected to the connection part (12) by means of a predetermined breaking point (15),
wherein the connection part (12) is formed integrally with the ampoule body (11) and comprises a threaded portion (122) with at least two threads (120A, 120B, 121A, 121B) arranged externally thereon which are offset axially with respect to one another along the longitudinal extension direction (L) and
wherein the connection part (12) of the ampoule (1) comprises an opening (125) into which the injection cone (21) of the removal device (2) is sealingly insertable and an inner wall of the opening (125) provides a sealing surface along the longitudinal extension direction (L) over a region of at least 1mm and
wherein the connection part (12) comprises a longitudinal extension, so that with the removal device (2) in a completely connected state the Luer cone (21) of the removal device (2) is situated in the connection part of the ampoule (1) and does not extend into the ampoule body (11).

2. Combination according to Claim 1, **characterized in that** each thread (120A, 120B, 121A, 121B) comprises two thread portions (120A, 120B, 121A, 121B) which are arranged on diametrically opposite sides of the threaded portion (122).

3. Combination according to one of Claims 1 to 2, **characterized in that** the predetermined breaking point (15) is provided exclusively by means of a ring predetermined breaking point which extends over the circumference of an opening (15) in the connection part (12).

4. Combination according to one of the preceding claims, **characterized in that** the break-off part (13) comprises an identification (131) in the form of an opening or embossing.

5. Combination according to one of the preceding claims, **characterized in that**, when viewed along the longitudinal extension direction (L), the break-off part (13) does not protrude beyond the predetermined breaking point (15) in the direction of the connection part (12).

6. Combination according to one of the preceding claims, **characterized in that** the ampoule body (10) comprises an oval form in cross section transversely to the longitudinal extension direction (L).

7. Combination according to Claim 6, **characterized in that**, in cross section transversely to the longitudinal extension direction (L), the ampoule body (10) comprises a width (B1), measured along a width direction (X) between connecting webs (14) which are arranged on both sides of the ampoule body, for connection to other ampoules (1), which width is smaller or equal to a depth (C1) of the ampoule body (11) that is measured along a depth direction (Y) transversely to the width direction (X) .

8. Combination according to one of the preceding claims, **characterized in that** on a side remote from the connection part (12), the ampoule body (10) comprises a bottom (110) which realizes a standing area onto which the ampoule (1) is able to be placed.

9. Combination according to one of the preceding claims, **characterized in that** the ampoule body (11) is collapsible.

10. Combination according to one of the preceding claims, **characterized in that** the opening (125) is tapered, preferably conically, along the longitudinal extension direction (L).

11. Combination according to one of the preceding claims, having at least one further identical ampoule (1), wherein two ampoules (1) are integrally connected together by means of a connecting web (14).

12. Combination according to Claim 11, **characterized in that** the connecting web (14) extends axially between the ampoule bodies (11) of the two ampoules (1) parallel to the longitudinal extension direction (L) and an incision (140) which points axially into the connecting web (14) is arranged on at least one axial end of the connecting web (14).

13. Combination according to Claim 11 or 12, **characterized in that** the break-off parts (13) of the ampoules (1), which are arranged side by side and are connected together by means of the connecting web (14), are not connected to one another.

## Revendications

1. Combinaison d'une ampoule (1) pour un liquide médical et d'un dispositif de prélèvement (2) avec un cône de seringue (21) disposé au niveau d'un corps de seringue (22),
l'ampoule (1) étant fabriquée par un procédé Blow-Fill-Seal, avec
- un corps d'ampoule (11) pour recevoir un liquide médical,
- une partie de raccordement (12) se raccordant au corps d'ampoule, s'étendant le long d'une direction d'étendue longitudinale (L) pour le raccordement hermétique d'un dispositif de prélèvement (2) avec un cône de Luer (21) à l'ampoule (1) et
- une partie frangible (13) qui est réalisée d'une seule pièce avec la partie de raccordement (12) et qui est connectée par le biais d'une zone de rupture (15) à la partie de raccordement (12),
la partie de raccordement (12) étant formée d'une seule pièce avec le corps d'ampoule (11) et présentant une portion filetée (122) avec au moins deux pas de filetage (120A, 120B, 121A, 121B) disposés sur celle-ci du côté extérieur, qui sont décalés axialement l'un par rapport à l'autre le long de la direction d'étendue longitudinale (L), et
la partie de raccordement (12) de l'ampoule (1) présentant une ouverture (125) dans laquelle peut être enfiché de manière hermétique le cône de seringue (21) du dispositif de prélèvement (2) et une paroi interne de l'ouverture (125) fournit une surface d'étanchéité le long de la direction d'étendue longitudinale (L) sur une région d'au moins 1 mm et
la partie de raccordement (12) présentant une étendue longitudinale de telle sorte que, du état complètement raccordé du dispositif de prélèvement (2), le cône de Luer (21) dans le dispositif de prélèvement (2) se trouve dans la partie de raccordement de l'ampoule (1) et ne s'étende pas dans le corps d'ampoule (11).

2. Combinaison selon la revendication 1, **caractérisée en ce que** chaque pas de filetage (120A, 120B, 121A, 121B) présente deux portions de pas de filetage (120A, 120B, 121A, 121B) qui sont disposées sur des côtés diamétralement opposés de la portion filetée (122).

3. Combinaison selon l'une quelconque des revendications 1 et 2, **caractérisée en ce que** la zone de rupture (15) est fournie exclusivement par une zone annulaire destinée à la rupture qui s'étend sur la périphérie d'une ouverture (15) dans la partie de raccordement (12).

4. Combinaison selon l'une quelconque des revendications précédentes, **caractérisée en ce que** la partie frangible (13) présente une caractéristique (131) sous la forme d'une ouverture ou d'un gaufrage.

5. Combinaison selon l'une quelconque des revendications précédentes, **caractérisée en ce que** la partie frangible (13) fait saillie dans la direction de la partie de raccordement (12) mais pas au-delà de la zone de rupture (15), considérée le long de la direction d'étendue longitudinale (L) .

6. Combinaison selon l'une quelconque des revendications précédentes, **caractérisée en ce que** le corps d'ampoule (10) présente une forme ovale en section transversale transversalement à la direction d'étendue longitudinale (L).

7. Combinaison selon la revendication 6, **caractérisée en ce que** le corps d'ampoule (10) présente, en section transversale transversalement à la direction d'étendue longitudinale (L), une largeur (B1) mesurée le long d'une direction en largeur (X) entre des nervures de connexion (14) disposées des deux côtés du corps d'ampoule pour la connexion à d'autres ampoules (1), laquelle est inférieure ou égale à une profondeur (C1) du corps d'ampoule (11) mesurée transversalement à la direction en largeur (X) le long d'une direction en profondeur (Y).

8. Combinaison selon l'une quelconque des revendications précédentes, **caractérisée en ce que** le corps d'ampoule (10) présente, au niveau d'un côté opposé à la partie de raccordement (12), un fond (110) qui constitue une surface d'appui sur laquelle peut être posée l'ampoule (1).

9. Combinaison selon l'une quelconque des revendications précédentes, **caractérisée en ce que** le corps d'ampoule (11) peut être affaissé.

10. Combinaison selon l'une quelconque des revendications précédentes, **caractérisée en ce que** l'ouverture (125) se rétrécit, de préférence coniquement, le long de la direction d'étendue longitudinale (L).

11. Combinaison selon l'une quelconque des revendications précédentes, comprenant au moins une ampoule identique supplémentaire (1), deux ampoules étant connectées d'une seule pièce l'une à l'autre par le biais d'une nervure de connexion (14) .

12. Combinaison selon la revendication 11, **caractérisée en ce que** la nervure de connexion (14) s'étend axialement parallèlement à la direction d'étendue longitudinale (L) entre les corps d'ampoule (11) des deux ampoules (1) et une entaille (140) orientée axialement vers l'intérieur de la nervure de connexion (14) est disposée au niveau d'au moins une extrémité axiale de la nervure de connexion (14).

13. Combinaison selon la revendication 11 ou 12, **caractérisée en ce que** les parties frangibles (13) des ampoules (1) disposées l'une à côté de l'autre et connectées l'une à l'autre par le biais de la nervure de connexion (14) ne sont pas connectées l'une à l'autre.
